(19) **Europäisches Patentamt**

**European Patent Office**

**Office européen des brevets**

(11) **EP 0 902 263 B1**

(12) **FASCICULE DE BREVET EUROPEEN**

(45) Date de publication et mention de la délivrance du brevet:
**19.05.2004 Bulletin 2004/21**

(51) Int Cl.⁷: **G01H 1/00**

(21) Numéro de dépôt: **98402260.8**

(22) Date de dépôt: **14.09.1998**

(54) **Procédé et dispositif pour la détermination des vibrations du rotor d'une machine tournante**

Verfahren und Vorrichtung zur Bestimmung von Schwingungen des Rotors einer drehenden Maschine

Method and apparatus for determining the vibrations of the rotor of a rotary machine

(84) Etats contractants désignés:
**AT BE CH DE DK ES FI FR GB GR IE IT LI LU NL PT SE**

(30) Priorité: **15.09.1997 FR 9711449**

(43) Date de publication de la demande:
**17.03.1999 Bulletin 1999/11**

(73) Titulaire: **TOTAL RAFFINAGE DISTRIBUTION S.A.**
**92800 Puteaux (FR)**

(72) Inventeurs:
• **Nguyen, The Tam**
**76600 Le Havre (FR)**
• **Lenclud, Christian**
**78540 Vernouillet (FR)**
• **Bigret, Roland**
**93700 Drancy (FR)**

(74) Mandataire: **Jolly, Jean-Pierre et al**
**Cabinet Jolly**
**54, rue de Clichy**
**75009 Paris (FR)**

(56) Documents cités:
**EP-A- 0 246 637       DE-A- 3 044 440**

EP 0 902 263 B1

**Description**

L'invention concerne un procédé de détermination des vibrations « vraies » du rotor d'une machine tournante, par acquisition des signaux de vibrations « apparentes » dudit rotor, puis élimination des signaux de bruits parasites.

L'invention concerne également des dispositifs permettant la mise en oeuvre d'un tel procédé, et l'utilisation de tels dispositifs pour la détermination des vibrations des rotors des machines tournantes en temps réel, de préférence par un système en ligne.

## ETAT DE LA TECHNIQUE

Les machines tournantes sont utilisées dans toutes sortes d'industries : on les retrouve, par exemple, aussi bien dans les groupes turbo-alternateurs des centrales électriques de production d'énergie que dans les compresseurs de raffinerie. En condition usuelle d'exploitation, ces machines tournent généralement à grande vitesse, et vibrent souvent de manière relativement importante. Les vibrations de ces machines doivent donc être surveillées pour des raisons de sécurité et de maintenance (diagnostic permettant de détecter les dysfonctionnement, les risques d'accidents,...).

La surveillance et l'analyse de leurs comportements vibratoires, ainsi que les diagnostics que l'on peut en tirer, sont habituellement effectués en enregistrant, au moyen de capteurs magnétiques, des signaux variables qui traduisent, au cours du temps, les déplacements relatifs apparents des rotors par rapport aux parties non rotatives des machines tournantes.

Ces capteurs sont généralement positionnés à la périphérie du rotor et lorsque ce dernier tourne, le capteur mesure, sur un même périmètre du rotor, le signal représentatif de son déplacement (ce périmètre est généralement appelé « piste de mesurage »).

Les signaux mesurés par les capteurs sont très souvent affectés par des bruits dus, notamment, aux défauts géométriques des pistes de mesurage du rotor et aux variations, au niveau de ces pistes, de la perméabilité magnétique et de la résistivité des matériaux constitutifs du rotor. Les valeurs des vibrations déterminées à partir de ces signaux sont donc entachées d'erreur: elles correspondent à des vibrations dites « apparentes », par opposition aux vibrations « réelles » du rotor.

Les bruits (en anglais « runout ») peuvent être importants par rapport aux valeurs des vibrations. Il est donc indispensable de les prendre en compte lors de l'évaluation des vibrations « réelles », ceci afin d'éviter d'établir un diagnostic faussé, qui pourrait conduire soit à un arrêt non justifié de la machine (fausse alerte), soit à une absence de détection d'une détérioration de la machine tournante, dont les conséquences peuvent être gravissimes (accidents, arrêt de l'exploitation pendant une longue période...).

Jusqu'à présent, les techniques proposées pour tenir compte des bruits consistent à mesurer, au moyen d'un capteur, le signal de vibration « apparente » du rotor, et à retrancher de ce signal un deuxième signal que l'on suppose, sans aucune vérification, être le bruit global et qui consiste en un enregistrement effectué à basse vitesse de rotation du rotor et au moyen d'un seul capteur, comme c'est le cas par exemple dans EP 246637.

Cependant, ces techniques ne sont pas satisfaisantes. En effet, elles ne permettent pas aux utilisateurs d'être certains que la valeur retranchée du signal de vibration « apparent » correspond bien aux véritables bruits affectant ce signal.

## EXPOSE SOMMAIRE DE L'INVENTION

Le problème à la base de l'invention est donc de mettre au point un procédé de détermination des vibrations « réelles » du rotor d'une machine tournante, procédé dans lequel on s'assure au préalable que le bruit que l'on retranche du signal de vibration « apparente » correspond effectivement au bruit affectant ce signal, de manière à avoir la certitude que la grandeur obtenue après retranchement corresponde effectivement aux vibrations « réelles » dudit rotor.

Poursuivant ses recherches dans ce domaine, la Demanderesse a mis au point un procédé permettant de déterminer ce que l'on peut considérer comme étant le véritable bruit affectant les signaux vibratoires du rotor d'une machine tournante.

Ce procédé a donc pour objectif la détermination des vibrations relatives "réelles" du rotor par rapport à la structure non rotative d'une machine tournante fonctionnant, en condition usuelle d'exploitation, à vitesse de rotation $\Omega$ élevée.

A cet effet, l'invention a pour premier objet un procédé de détermination des vibrations du rotor d'une machine tournante fonctionnant, en condition usuelle d'exploitation, à vitesse de rotation $\Omega$ élevée, procédé dans lequel on acquiert et on numérise un signal S provenant d'au moins un capteur de déplacement dudit rotor lorsque celui-ci tourne dans ses conditions usuelles d'exploitation, puis on lui soustrait un signal de référence B du même type et qui a été déterminé au préalable à une vitesse $\Omega_b$ de rotation du rotor inférieure à la vitesse d'exploitation $\Omega$, ce procédé étant caractérisé en ce que le signal de référence B a été acquis à une vitesse $\Omega_b$ telle que les signaux provenant d'au moins deux capteurs de déplacement du rotor, décalés angulairement dans un même plan perpendiculaire à l'axe de symétrie A dudit rotor, soient sensiblement identiques au décalage temporel près.

Par "signal B du même type que le signal S", on entend que B a été acquis au moyen du même type de capteur que S, ce qui est fondamental, puisque les bruits affectant un signal dépendent aussi du type de capteur avec lequel ce signal a été acquis.

L'invention a également pour objet un dispositif comprenant au moins deux capteurs de déplacement dudit rotor décalés angulairement dans un même plan perpendiculaire à l'axe de symétrie du rotor, des moyens de numérisation, d'enregistrement et de traitement complémentaire du signal S émis par au moins un des capteurs, ces moyens de traitement étant aptes à soustraire au signal S un signal de référence B qui a été préalablement acquis, numérisé et enregistré à vitesse $\Omega_b$ de rotation du rotor inférieure à la vitesse d'exploitation $\Omega$, la vitesse inférieure $\Omega_b$ étant telle que les signaux provenant des au moins deux capteurs de déplacement dudit rotor soient sensiblement identiques au décalage temporel près.

D'autres avantages du procédé et des dispositifs selon l'invention ressortiront à la lecture de la suite de la description à laquelle sont annexées, à titre uniquement illustratif, les figures 1 à 5.

## DESCRIPTION SOMMAIRE DES FIGURES

La figure 1 représente les variations d'un signal brut S (signal de vibration « apparent ») en fonction du temps et sur une période de rotation de la machine tournante.

La figure 2 représente les variations d'un signal de référence B (bruit) tel que déterminé par le procédé selon l'invention, en fonction du temps et sur une période de rotation de la machine tournante.

La figure 3 représente les variations du signal brut S de la figure 1 auquel on a retranché le bruit B de la figure 2, en fonction du temps et sur une période de rotation de la machine tournante.

La figure 4 représente schématiquement et partiellement, en vue de face, une machine tournante équipée d'un dispositif permettant de déterminer le signal de bruit B conformément à l'invention.

La figure 5 représente schématiquement et partiellement, la machine tournante de la figure 4, en vue de gauche.

## EXPOSE DETAILLE DE L'INVENTION

### Procédé selon l'invention

Dans le procédé selon l'invention, on retranche un signal B préenregistré au signal S de vibration « apparente » du rotor de la machine tournante, en condition d'exploitation, à vitesse de rotation $\Omega$.

$\Omega$ peut être une vitesse fixe (vitesse dite nominale, correspondant à un régime d'exploitation donné) ou au contraire variable, comme c'est le cas dans les régimes transitoires (augmentation ou diminution de la vitesse de rotation du rotor). L'ordre de grandeur de $\Omega$ dépend entièrement du type de machine et de ses conditions d'exploitation.

Pour éviter les erreurs de diagnostic, il est nécessaire que le signal de référence B corresponde effectivement au bruit affectant les signaux de vibration du rotor de la machine tournante.

Tandis que le signal de bruit B est par nature indépendant de la vitesse de rotation du rotor, les vibrations varient avec ladite vitesse de rotation. C'est pourquoi selon l'invention, le signal B doit être acquis à une vitesse $\Omega_b$ de rotation du rotor inférieure à la vitesse normale d'exploitation $\Omega$. $\Omega_b$ doit être suffisamment basse pour que le rotor ne vibre plus, de telle sorte que le signal B mesuré à cette vitesse $\Omega_b$ ne représente plus que le bruit.

De préférence, la vitesse de rotation $\Omega_b$ à laquelle se fait l'acquisition du signal de référence B est inférieure à 20% de la vitesse moyenne $\Omega_m$ de rotation du rotor en exploitation.

La vitesse $\Omega_b$ de rotation du rotor lors de l'acquisition du signal B peut être constante (régime stationnaire) ou lentement variable (régime lentement variable). En effet, il est en pratique difficile de maintenir strictement constante une basse vitesse de rotation du rotor. C'est pourquoi il peut être avantageux de réaliser l'acquisition en régime lentement variable: la vitesse $\Omega_b$ varie lentement et continûment au cours de l'acquisition, tout en restant suffisamment basse. L'enregistrement est ensuite traité par des moyens de traitement informatiques connus en soi et qui permettent de le corriger pour qu'il soit équivalent à un enregistrement effectué à vitesse constante $\Omega_{bm}$, $\Omega_{bm}$ étant la vitesse moyenne de rotation du rotor lors de l'acquisition du signal B en régime lentement variable.

Par ailleurs, afin de valider la nature du signal B enregistré à vitesse $\Omega_b$ de rotation du rotor, on compare les signaux B1 et B2 provenant de deux capteurs respectifs C1 et C2 décalés angulairement sur une même piste de mesurage. Si, aux décalages temporels près, les signaux B1 et B2 sont sensiblement identiques (compte tenu des incertitudes de mesure des capteurs), l'utilisateur peut alors être certain que lesdits signaux B1 et B2 correspondent effectivement au bruit.

Si B1 et B2 sont sensiblement identiques, on peut conclure qu'à la vitesse $\Omega_b$ à laquelle ils ont été acquis, le rotor ne vibrait pas. On peut alors conserver comme signal de référence B l'un quelconque des signaux B1 et B2 puisque ceux-ci sont quasiment identiques.

Selon l'invention, on considère préférentiellement que les signaux B1 et B2 provenant des deux capteurs sont identiques lorsque les différences entre ces deux signaux sont inférieures à une valeur prédéterminée. Ladite valeur prédéterminée est de préférence une valeur faible qui dépend généralement du type de machine, de son mode d'exploitation ainsi que des conditions de sécurité requises, et que l'homme de métier sait aisément évaluer.

Une méthode avantageuse de détermination du signal de référence B comprend les étapes suivantes:

a) on acquiert, on numérise et on enregistre, en fonction du temps et à basse vitesse de rotation $\Omega_b$, les signaux B1 et B2 provenant respectivement d'au moins deux capteurs C1, C2 de déplacement du rotor décalés angulairement l'un par rapport à l'autre sur une même piste de mesurage,

b) on réalise un décalage temporel de l'un au moins des signaux B1, B2 de manière à réaliser une superposition desdits signaux,

c) si les signaux B1 et B2 sont sensiblement identiques, on choisit comme signal de référence B l'un quelconque desdits signaux; sinon, on réitère le processus à partir de l'étape a) avec une nouvelle vitesse de rotation $\Omega_b'$.

Ainsi, pour comparer les signaux B1 et B2 qui sont des signaux périodiques, on réalise un décalage temporel de l'un d'entre eux, de manière à compenser le décalage angulaire entre les deux capteurs et superposer lesdits signaux.

Il va de soi que l'utilisateur a avantage à ne pas se limiter à un enregistrement, même si le signal B correspondant répond aux critères énoncés ci-avant. S'il veut affiner sa mesure du bruit, il procédera au contraire à un grand nombre d'enregistrements des signaux B1 et B2, avec plusieurs basses vitesses $\Omega_b$ de rotation du rotor différentes, de manière à pouvoir ensuite isoler; parmi tous les enregistrements réalisés, celui pour lequel la superposition du couple de signaux est la plus parfaite.

Une méthode avantageuse de détermination du signal de référence B consiste ainsi à le choisir à partir de plusieurs essais à différentes vitesses $\Omega_b$ de rotation, en sélectionnant l'essai pour lequel les signaux acquis au moyen des deux capteurs C1, C2 se superposent le mieux.

Pour comparer la qualité de superposition des signaux B1 et B2 acquis au moyen respectivement des capteurs C1 et C2 lors de différents essais d'enregistrement du bruit effectués à différentes vitesses de rotation $\Omega_b$, on peut utiliser différents critères de qualité.

On peut par exemple procéder de la manière suivante : pour un essai donné, si D est le signal correspondant à la différence des signaux B1 et B2 après superposition (décalage temporel), on calcule les critères suivants :

$Q_{C1}$ = (Valeur crête à crête maximum de D)/(Valeur crête à crête minimum de B1)
$Q_{C2}$ = (Valeur crête à crête maximum de D)/(Valeur crête à crête minimum de B2)
$Qs_{C1}$ = (Amplitude composante spectrale de D)/(Amplitude composante spectrale de B1)
$Qs_{C2}$ = (Amplitude composante spectrale de D)/(Amplitude composante spectrale de B2).

Pour chaque essai, on calcule ces critères. Le signal B choisi est alors l'un quelconque des signaux B1 ou B2 correspondant au meilleur essai, qui est l'essai pour lequel les critères tels que définis ci-dessus sont les plus bas.

La superposition des signaux B1 et B2 peut être optimisée si on utilise, pour effectuer le calcul du signal D (différence des signaux B1 et B2 après superposition), outre la valeur de l'angle a entre les capteurs C1 et C2 mesurée ou donnée par le constructeur, des valeurs comprises dans un certain intervalle $\Delta\alpha$ autour de $\alpha$ et que l'on choisit pour D la valeur la plus faible trouvée. $\Delta\alpha$ est l'intervalle de tolérance de l'angle $\alpha$ et est dû aux incertitudes de positionnement des capteurs.

La détermination des critères ci-dessus est réalisée sur des signaux B1 et B2 discrêts , c'est à dire qu'ils ont été discrétisés (ou échantillonnés) au moment de leur enregistrement.

Dans la présente invention, les capteurs sont nécessairement situés dans un même plan perpendiculaire à l'axe de symétrie du rotor, c'est à dire qu'ils sont positionnés sur une même piste de mesurage.

Ils sont décalés angulairement d'un angle $\alpha$ connu qui peut être quelconque. Toutefois, afin de réduire les incertitudes et de faciliter les étapes de comparaison des signaux acquis au moyen de ces capteurs, lesdits capteurs C1 et C2 sont de préférence décalés angulairement l'un par rapport à l'autre d'un angle $\alpha$ de 90 degrés.

Comme capteurs de déplacement du rotor, on pourra utiliser tout capteur permettant de mesurer une grandeur physique caractéristique du déplacement relatif du rotor dans la direction dudit capteur. C'est le cas des capteurs de type magnétique, mais la mesure peut être effectuée au moyen d'autres types de capteurs tels que par exemple des capteurs capacimétriques, des capteurs de type optique (capteurs à laser), étant toutefois entendu que les capteurs C1 et C2 sont nécessairement des capteurs du même type.

Afin de consolider la validation du signal de bruit B, l'utilisateur pourra aisément adapter les méthodes décrites ci-dessus pour effectuer l'acquisition et la validation de ce signal au moyen de trois capteurs ou plus, décalés angulairement dans un même plan perpendiculaire à l'axe de symétrie du rotor. Il pourra par exemple avantageusement utiliser trois capteurs, positionnés à 120 degrés les uns des autres.

Le signal B est acquis, numérisé et enregistré avec une fréquence de discrétisation (appelée aussi échantillonnage) $f_{db}$. L'acquisition est réalisée sur au moins une période de rotation du rotor tournant à basse vitesse $\Omega_b$.

On obtient ainsi des couples de type $(B(t),t)$, $B(t)$ étant la valeur du signal B au temps t. Le nombre $k_b$ de valeurs discrètes est égal à la fréquence de discrétisation $f_{db}$ divisée par la fréquence de rotation du rotor $f_{rb}$, c'est-à-dire que $k_b = f_{db} / f_{rb}$.

L'intervalle temporel entre deux valeurs discrètes correspond à $\Delta T = 1/f_{db}$.

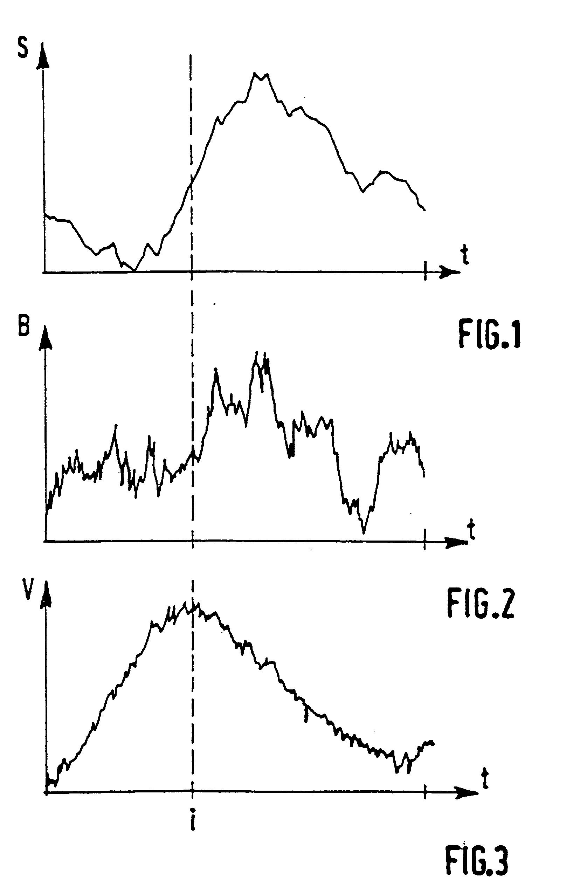

Cet ensemble de couples de valeurs peut être représenté par la courbe de la figure 2, où l'on a représenté en abscisse le temps correspondant à une révolution du rotor et en ordonnée, les valeurs B(t) correspondantes.

Le signal brut S, ou signal de vibration « apparent » du rotor, tel que représenté sur la figure 1, est acquis, numérisé et enregistré avec une fréquence de discrétisation $f_{dr}$. Le rotor tourne à vitesse d'exploitation usuelle de la machine (vitesse $\Omega$), et l'acquisition est réalisée sur au moins une période de rotation du rotor. On obtient ainsi des couples de type (S(t),t), S(t) étant la valeur du signal S au temps t. Le nombre $k_r$ de valeurs discrètes est égal à la fréquence de discrétisation $f_{dr}$ divisée par la fréquence de rotation du rotor $f_r$, c'est-à-dire que $k_r = f_{dr} / f_r$

Comme la vitesse basse $\Omega_b$ de rotation du rotor qui est utilisée pour mesurer le signal B et la vitesse $\Omega$ d'exploitation normale de la machine tournante sont, par définition, différentes, il est nécessaire, si l'on veut pouvoir retrancher le signal B au signal S (par exemple après superposition de leurs courbes respectives), d'étirer dans le temps la courbe du signal S et/ou de comprimer la courbe du signal B. Ces étirement et compression sont des opérations mathématiques bien connues et consistent à rediscrétiser les signaux de façon classique.

En outre, il est souhaitable que l'on puisse comparer chaque valeur discrète de la courbe du signal brut S à la valeur discrète qui lui correspond sur la courbe du signal de référence B. En d'autres termes, le nombre de valeurs discrètes comprises dans une période du signal S doit être égal au nombre de valeurs discrètes comprises dans une période du signal B. Cette condition peut être exprimée par l'équation suivante :

$k_b = k_r$, ce qui se traduit par:

$$\frac{f_{dr}}{f_r} = \frac{f_{db}}{f_{rb}}$$

dans laquelle :

$f_{dr}$ est la fréquence de discrétisation utilisé lors de l'acquisition du signal S,

$f_r$ est la fréquence de rotation du rotor lors de acquisition du signal S sur la machine tournante,

$f_{db}$ est la fréquence de discrétisation utilisé lors de l'acquisition du signal B, et

$f_{rb}$ est la fréquence de rotation du rotor lors de l'acquisition du signal B sur la machine tournante.

Toutefois, cette condition n'est en général pas remplie dans la pratique. Comme il n'est pas possible de modifier $f_{rb}$ (car on ne peut refaire l'acquisition de B une fois que la machine est à nouveau en exploitation), ni de modifier $f_r$, (car on ne peut faire varier librement la fréquence de rotation du rotor qui est liée à son mode d'exploitation), la Demanderesse propose alors de procéder à une rediscrétisation du signal B et/ou à une rediscrétisation du signal S.

De telles rediscrétisations sont des opérations mathématiques bien connues des informaticiens. Elles permettent d'obtenir, par exemple,

- à partir de $k_b$ couples de valeurs discrètes (B(t),t), $k_b'$ couples (B'(t'),t')
- à partir de $k_r$ couples de valeurs discrètes (S(t),t), $k_r'$ couples (S'(t'),t').

Avec $k_b' = k_r'$, le signal B peut alors être soustrait du signal S.

Avantageusement, les fréquences de discrétisation et de rediscrétisation des signaux B et S satisfont les équations suivantes :

pour B : $0{,}2 \leq f_{rdb}/f_{db} \leq 1{,}2$

$f_{rdb}$ étant la fréquence de rediscrétisation du signal de référence B,

et pour S : $0{,}2 \leq f_{rdr}/f_{dr} \leq 1{,}2$

$f_{rdr}$ étant la fréquence de rediscrétisation du signal brut S.

Ceci permet d'éviter que les valeurs rediscrétisées ne soient trop éloignées des valeurs réelles mesurées.

Ces rediscrétisations présentent donc l'avantage de permettre une acquisition des signaux en mode libre, c'est-à-dire qu'il n'est pas nécessaire que les fréquences de discrétisation soient des multiples de la fréquence de rotation du rotor.

Ainsi, si l'on a rediscrétisé uniquement le signal B, l'équation suivante sera vérifiée :

$$\frac{f_{dr}}{f_r} = \frac{f_{rdb}}{f_{rb}}$$

Si l'on a rediscrétisé uniquement le signal S, l'équation suivante sera vérifiée :

$$\frac{f_{rdr}}{f_r} = \frac{f_{db}}{f_{rb}}$$

Enfin, si l'on a rediscrétisé le signal S et le signal B, l'équation suivante sera vérifiée :

$$\frac{f_{rdr}}{f_r} = \frac{f_{rdb}}{f_{rb}}$$

Comme les signaux B et S sont périodiques, les calculs peuvent être effectués sur une seule période de rotation du rotor. Néanmoins, si les signaux ont été enregistrés sur plusieurs périodes, des moyennes peuvent être effectuées en vue d'optimiser la détermination du bruit.

Une fois que les signaux B et S ont été acquis puis traités conformément à ce qui précède, le signal B représentant le bruit peut alors être retranché du signal S de vibration « apparent » du rotor. Il en résulte un signal V qui représente la vibration « réelle » dudit rotor.

L'acquisition du signal de référence B doit être faite à basse vitesse $\Omega_b$ de rotation du rotor, c'est à dire lorsque la machine n'est pas en exploitation normale. Il est donc évidemment avantageux pour l'utilisateur de profiter des arrêts de la machine (lors des opérations de maintenance par exemple) pour procéder, immédiatement avant le redémarrage, à l'acquisition de ce signal B. Il l'enregistre alors sur un support approprié (disque, bande magnétique par exemple) et peut ensuite, en cours d'exploitation, utiliser ce signal de référence B préalablement enregistré pour déterminer à tout moment les vibrations "réelles" du rotor de sa machine.

Les résultats auxquels l'invention permet de parvenir sont illustrés par les figures 1, 2 et 3.

Le signal brut S (éventuellement rediscrétisé) est représenté à l'échelle 1 sur la figure 1. Il a été acquis pour une vitesse $\Omega$ de rotation du rotor de 7620 tours/min et correspond donc aux vibrations "apparentes" qui incluent les bruits.

Le signal de référence B (éventuellement rediscrétisé) tel que déterminé à l'aide du procédé selon l'invention, est représenté à l'échelle 0,44 sur la figure 2. Il a été acquis à une vitesse $\Omega_b$ de rotation du rotor de 500 tours/min et correspond aux bruits dont est entaché le signal brut S.

Le signal V, qui est le signal S auquel on a retranché le signal B, est représenté à l'échelle 0,88 sur la figure 3. Il correspond donc aux vibrations "réelles" du rotor à une vitesse de rotation de 7620 tours/min.

Il apparaît donc immédiatement, sur la figure 3, qu'au temps t = i, la vibration du rotor est importante. Une telle vibration ne peut être décelée sur les figures 1 et 2. Elle peut donc être décelée sur la figure 3 grâce au procédé selon l'invention, qui permet ainsi d'éviter des erreurs de diagnostic lors de la surveillance vibratoire des machines tournantes.

## Dispositifs conformes à l'invention

Le procédé selon l'invention peut être mis en oeuvre au moyen de dispositifs appropriés, destinés à être placés sur une machine tournante de type classique.

La présente invention a donc également pour objet un dispositif pour la détermination des vibrations du rotor 1 d'une machine tournante fonctionnant à une vitesse de rotation $\Omega$ élevée.

Ce dispositif comprend aux moins deux capteurs C, C1, C2 de déplacement dudit rotor 1 décalés angulairement dans un même plan perpendiculaire à l'axe de symétrie A du rotor 1, des moyens de numérisation, d'enregistrement et de traitement complémentaire 4, 5 du signal S émis par au moins un des capteurs C, ces moyens de traitement 4, 5 étant aptes à soustraire au signal S un signal de référence B qui a été préalablement acquis, numérisé et enregistré à vitesse $\Omega_b$ de rotation du rotor 1 inférieure à la vitesse d'exploitation $\Omega$, la vitesse inférieure $\Omega_b$ étant telle que les signaux provenant des au moins deux capteurs C1, C2 de déplacement dudit rotor 1 soient sensiblement identiques au décalage temporel près.

Avantageusement, les moyens de traitement 4, 5 sont aptes à déterminer un signal de référence B, correspondant aux bruits recherchés, de la manière suivante :

a) acquisition, numérisation et enregistrement, en fonction du temps, des signaux de référence B1, B2 émis par lesdits au moins deux capteurs C1, C2, à basse vitesse $\Omega_b$ du rotor 1, cette basse vitesse $\Omega_b$ étant fixe ou lentement variable,

b) décalage temporel de l'un au moins des signaux de référence B1, B2 de manière à réaliser une superposition desdits signaux,

c) si les signaux référence B1, B2 sont sensiblement identiques, sélection de l'un quelconque desdits signaux B1, B2 comme signal de référence B ; sinon, réitération du processus à partir de l'étape a) avec une nouvelle vitesse $\Omega_b$ de rotation du rotor 1.

Les capteurs C1 et C2 sont des capteurs du même type, de préférence des capteurs de type magnétique.

Lesdits moyens de traitement comprennent avantageusement des moyens informatiques.

De préférence, ils sont aptes à choisir le signal de référence B à partir de plusieurs essais effectués à différentes vitesses $\Omega_b$ de rotation du rotor, en sélectionnant l'essai pour lequel les signaux B1 et B2 émis par les deux capteurs se superposent le mieux.

De plus, lesdits moyens de traitement comprennent si nécessaire des moyens de traitement informatiques connus en soi et qui permettent de corriger le signal B enregistré pour qu'il soit équivalent à un enregistrement effectué à vitesse constante $\Omega_{bm}$, lorsque l'acquisition du signal B a été effectuée en régime lentement variable avec une vitesse moyenne $\Omega_{bm}$ de rotation du rotor.

Un tel dispositif de détermination des signaux de bruit B est utilisé lorsque le rotor tourne à basse vitesse $\Omega_b$, c'est à dire lorsque la machine n'est pas en exploitation.

Lesdits moyens de traitement comprennent aussi des moyens de traitement des signaux, aptes à soustraire le signal B préenregistré au signal S acquis par le capteur C lorsque le rotor tourne à l'une ou l'autre de ses vitesses d'exploitation.

De préférence, lesdits moyens de traitement sont aptes à rediscrétiser, selon des fréquences prédéterminées, l'un ou l'autre des signaux S ou B.

Lesdits moyens de traitement comprennent avantageusement des moyens informatiques, et en particulier des moyens de calcul commandés en tout ou partie par un logiciel consistant en un programme informatique approprié.

La vibration V obtenue in fine (après soustraction du signal B au signal S), et représentant les vibrations "réelles" relatives du rotor par rapport à la structure non rotative de la machine tournante, peut être affichée sur des moyens d'affichage classiques tels qu'un écran, imprimée au moyen d'une imprimante, ou utilisée dans un traitement ultérieur (par exemple, pour une comparaison à un seuil, en vue, le cas échéant, du déclenchement d'une alarme).

Les dispositifs pour la détermination du signal de référence B et du signal de vibration vraie V comportent de nombreux éléments communs. Le dispositif pour la détermination du signal de référence B comporte au moins les deux capteurs C1 et C2, tandis que le dispositif pour la détermination du signal de vibration vraie V comporte au moins un capteur C, qui peut avantageusement être l'un ou l'autre des capteurs C1 ou C2.

De plus, les moyens de numérisation et d'enregistrement des signaux peuvent être identiques dans les deux dispositifs. Les moyens de traitement employés dans ces dispositifs peuvent avantageusement être aptes à effectuer sur les signaux d'autres traitements classiques, tel qu'un moyennage, un filtrage, un lissage, etc.

C'est pourquoi il est avantageux pour l'utilisateur de réunir les deux dispositifs dans un seul et même dispositif polyvalent, dont il pourra utiliser soit la fonction détermination du signal de référence B, soit la fonction détermination des vibrations « vraies » V.

Ces fonctions seront avantageusement pilotées à l'aide de un ou plusieurs logiciels comportant des programmes informatiques appropriés.

Enfin, les deux dispositifs comprennent avantageusement au moins un moyen de détermination de la vitesse de rotation ($\Omega$, $\Omega_b$) du rotor. Ce peut être tout moyen classique tel que par exemple un système comptant les tours effectués par le rotor au cours du temps grâce à un capteur (magnétique ou autre) détectant le passage d'un repère placé sur le rotor.

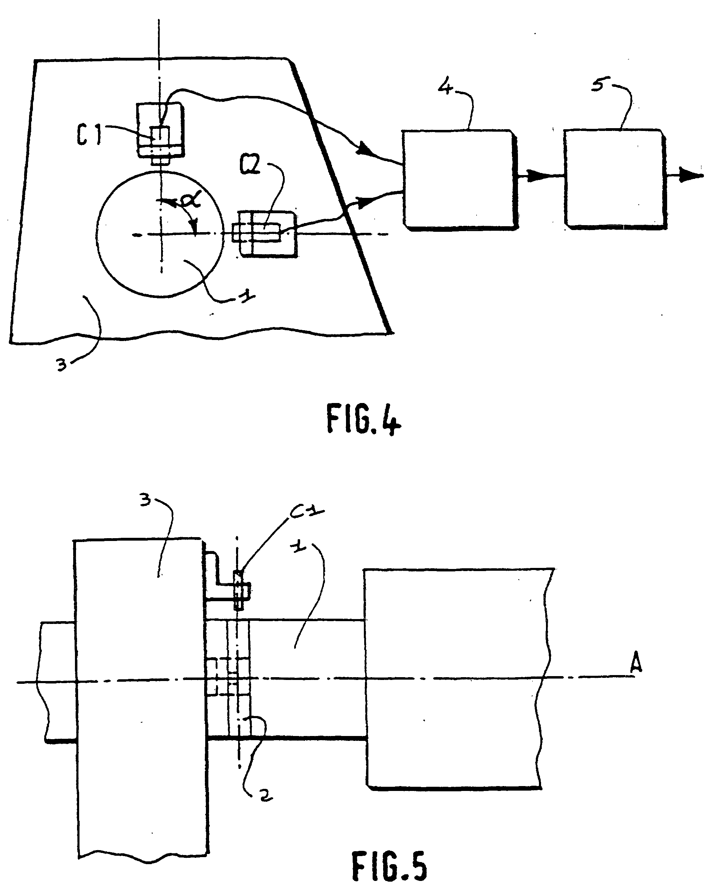

Les figures 4 et 5 présentent une machine tournante, équipée d'un dispositif de détermination des signaux de référence B (bruits) conforme à l'invention. Seule la partie de la machine nécessaire à la compréhension de l'invention a été représentée, dont le rotor 1 sur lequel est prévue au moins une piste de mesurage 2. Le rotor 1 est maintenu par un support fixe 3.

Le dispositif de détermination des signaux de bruit B comprend au moins deux capteurs C1 et C2 de déplacement du rotor 1, solidaires du support 3 dudit rotor. Ces capteurs visent la piste de mesurage 2 et sont décalés angulairement l'un par rapport à l'autre d'un angle $\alpha$. Ils délivrent chacun un signal (B ou S), qui est fonction de l'éloignement radial apparent du rotor 1 par rapport au capteur considéré. Ce dispositif comprend également des moyens 4 d'acquisition, de numérisation et d'enregistrement, en fonction du temps, des signaux délivrés par les capteurs (C1,C2) ainsi que des moyens 5 appropriés au traitement de ces signaux comme spécifié dans le procédé de l'invention.

Les capteurs C1 et C2 sont de préférence des capteurs magnétiques. Ils sont décalés l'un par rapport à l'autre d'un angle $\alpha$, de préférence de 90 degrés, et disposés dans un même plan perpendiculaire à l'axe de symétrie A du rotor 1.

Les moyens 4 d'acquisition, de numérisation et d'enregistrement, en fonction du temps, des signaux délivrés par les capteurs C1,C2 sont bien connus de l'homme du métier. Ils comprennent généralement un analyseur.

Les moyens 5 de traitement permettent de sélectionner le signal B comme exposé ci-avant. Ils peuvent avantageusement calculer des critères de qualité et optimiser la superposition des signaux en faisant varier l'angle entre capteurs autour de sa valeur théorique comme expliqué dans l'exposé du procédé selon l'invention.

Ainsi, grâce à la détermination selon l'invention du signal B, on peut considérer que le signal V résultant de la soustraction du signal B au signal S est la vibration « réelle » du rotor permettant d'effectuer un diagnostic préventif pouvant éviter les défaillances majeures.

Le procédé et les dispositifs selon l'invention représentent donc des outils particulièrement appropriés pour la surveillance ponctuelle ou en ligne du fonctionnement d'une machine tournante.

De préférence, ils sont utilisés dans un système de surveillance automatique en ligne du fonctionnement d'une machine tournante, avec déclenchement éventuel d'une alarme (sonore ou visuelle par exemple) lorsque la machine atteint des niveaux de vibration dépassant les seuils de sécurité admis.

L'utilisateur peut ainsi, en parfaite connaissance de cause, prendre la décision de stopper ou non la machine tournante.

## Revendications

**1.** Procédé de détermination des vibrations du rotor (1) d'une machine tournante fonctionnant, en condition usuelle d'exploitation, à vitesse de rotation ($\Omega$) élevée, procédé dans lequel on acquiert et on numérise un signal (S) provenant d'au moins un capteur (C) de déplacement dudit rotor (1) lorsque celui-ci tourne dans ses conditions usuelles d'exploitation, puis on lui soustrait un signal de référence (B) du même type et qui a été déterminé au préalable à une vitesse ($\Omega_b$) de rotation du rotor (1) inférieure à la vitesse d'exploitation ($\Omega$), ce procédé étant **caractérisé en ce que** le signal de référence (B) a été acquis à une vitesse ($\Omega_b$) telle que les signaux provenant d'au moins deux capteurs (C1, C2) de déplacement du rotor (1), décalés angulairement dans un même plan perpendiculaire à l'axe de symétrie (A) dudit rotor, soient sensiblement identiques au décalage temporel près.

2. Procédé selon la revendication 1, **caractérisé en ce que** ladite vitesse de rotation ($\Omega_b$) à laquelle se fait l'acquisition du signal de référence (B) est inférieure à 20% de la vitesse moyenne ($\Omega_m$) de rotation du rotor en exploitation.

3. Procédé selon l'une quelconque des revendications précédentes, **caractérisé en ce que** le signal de référence (B) est acquis à une vitesse ($\Omega_b$) de rotation du rotor (1) telle que les différences entre les deux signaux provenant des deux capteurs (C1, C2) soient inférieures à une valeur prédéterminée.

4. Procédé selon l'une quelconque des revendications précédentes, **caractérisé en ce que** les étapes de détermination du signal de référence (B) sont les suivantes :

   a) on acquiert, on numérise et on enregistre, en fonction du temps et à basse vitesse de rotation ($\Omega_b$) les signaux de référence (B1 et B2) provenant respectivement d'au moins deux capteurs (C1, C2) de déplacement du rotor (1) décalés angulairement l'un par rapport à l'autre sur une même piste de mesurage (2),
   b) on réalise un décalage temporel de l'un au moins des signaux de référence (B1, B2) de manière à réaliser une superposition desdits signaux,
   c) si les signaux de référence (B1 et B2) sont sensiblement identiques, on choisit comme signal de référence (B) l'un quelconque desdits signaux; sinon, on réitère le processus à partir de l'étape a) avec une nouvelle vitesse de rotation ($\Omega_{b'}$).

5. Procédé selon l'une quelconque des revendications précédentes, **caractérisé en ce que** la vitesse ($\Omega_b$) de rotation du rotor (1) varie lentement et continûment au cours de l'acquisition du signal de référence (B) et **en ce que** l'enregistrement est ensuite traité par des moyens de traitement informatiques connus en soi et qui permettent de le corriger pour qu'il soit équivalent à un enregistrement effectué à vitesse constante ($\Omega_{bm}$) étant la vitesse moyenne de rotation du rotor (1) lors de l'acquisition du signal de référence (B) en régime lentement variable.

6. Procédé selon l'une quelconque des revendications précédentes, **caractérisé en ce que** le signal de référence (B) est choisi à partir de plusieurs essais à différentes vitesses de rotation ($\Omega_b$) en sélectionnant l'essai pour lequel les signaux des deux capteurs (C1,C2) se superposent le mieux.

7. Procédé selon l'une quelconque des revendications précédentes, **caractérisé en ce que** lesdits capteurs (C, C1, C2) de déplacement du rotor (1) sont des capteurs (C,C1,C2) mesurant une grandeur physique caractéristique du déplacement relatif du rotor (1) dans la direction du capteur considéré, tels que par exemple des capteurs de type magnétique, des capteurs capacimétriques, des capteurs de type optique.

8. Procédé selon l'une quelconque des revendications précédentes, **caractérisé en ce que** lesdits capteurs (C1, C2) nécessaires à la détermination du signal de référence (B) sont décalés angulairement l'un par rapport à l'autre de 90°.

9. Procédé selon l'une quelconque des revendications précédentes, **caractérisé en ce que** le signal (S) est acquis, numérisé, puis enregistré en fonction du temps avec une fréquence de discrétisation $f_{dr}$ le signal de référence (B) est acquis, numérisé, puis enregistré en fonction du temps avec une fréquence de discrétisation $f_{db}$, les fréquences de discrétisation $f_{dr}$ et $f_{db}$ satisfaisant l'équation suivante :

$$\frac{f_{dr}}{f_r} = \frac{f_{db}}{f_{rb}}$$

   dans laquelle :

   $f_r$ est la fréquence de rotation du rotor lors de l'acquisition du signal (S), et
   $f_{rb}$ est la fréquence de rotation du rotor lors de l'acquisition du signal de référence (B).

10. Procédé selon l'une des revendications 1 à 8, **caractérisé en ce que** la soustraction du signal de référence (B) au signal (S) est précédée d'une étape de rediscrétisation du signal de référence (B) à une fréquence de rediscrétisation $f_{rdb}$.

11. Procédé selon la revendication 10, **caractérisé en ce que** la fréquence de rediscrétisation $f_{rdb}$ et la fréquence de discrétisation $f_{db}$ satisfont l'équation suivante :

$$0{,}2 \leq f_{rdb}/f_{db} \leq 1{,}2.$$

12. Procédé selon l'une quelconque des revendications 1 à 8, 10, 11, **caractérisé en ce que** la soustraction du signal de référence (B) au signal (S) est précédée d'une étape de rediscrétisation du signal (S) à une fréquence de rediscrétisation $f_{rdr}$.

**13.** Procédé selon la revendication 12, **caractérisé en ce que** la fréquence de rediscrétisation $f_{rdr}$ et la fréquence de discrétisation $f_{dr}$ satisfont l'équation suivante :

$$0{,}2 \leq f_{rdr}/f_{dr} \leq 1{,}2 \ .$$

**14.** Dispositif pour la détermination des vibrations du rotor (1) d'une machine tournante fonctionnant à vitesse de rotation ($\Omega$) élevée, ledit dispositif comprenant au moins deux capteurs (C, C1, C2) de déplacement dudit rotor (1) décalés angulairement dans un même plan perpendiculaire à l'axe de symétrie (A) du rotor (1), des moyens de numérisation, d'enregistrement et de traitement complémentaire (4, 5) du signal (S) émis par au moins un des capteurs (C), ces moyens de traitement (4, 5) étant aptes à soustraire au signal (S) un signal de référence (B) qui a été préalablement acquis, numérisé et enregistré à vitesse ($\Omega_b$) de rotation du rotor (1) inférieure à la vitesse d'exploitation ($\Omega$), la vitesse inférieure ($\Omega_b$) étant telle que les signaux provenant des au moins deux capteurs (C1, C2) de déplacement dudit rotor (1) soient sensiblement identiques au décalage temporel près.

**15.** Dispositif selon la revendication 14, **caractérisé en ce que** lesdits moyens de traitement (5) sont aptes à choisir le signal de référence (B) à partir de plusieurs essais effectués à différentes vitesses ($\Omega_b$) de rotation du rotor (1), en sélectionnant l'essai pour lequel les signaux de référence (B1 et B2) émis par les deux capteurs (C1, C2) se superposent le mieux.

**16.** Dispositif selon l'une des revendications 14 et 15, **caractérisé en ce que** les capteurs (C1 et C2) sont des capteurs du même type, de préférence des capteurs de type magnétique.

**17.** Dispositif selon l'une des revendications 14 et 16, dans lequel les moyens de traitement (4, 5) sont aptes à déterminer un signal de référence (B), correspondant aux bruits recherchés, de la manière suivante :

a) acquisition, numérisation et enregistrement, en fonction du temps, des signaux de référence (B1, B2) émis par lesdits au moins deux capteurs (C1, C2), à basse vitesse ($\Omega_b$) du roto (1), cette basse vitesse ($\Omega_b$) étant fixe ou lentement variable,

b) décalage temporel de l'un au moins des signaux de référence (B1, B2) de manière à réaliser une superposition desdits signaux,

c) si les signaux référence (B1, B2) sont sensiblement identiques, sélection de l'un quelconque de desdits signaux (B1, B2) comme signal de référence (B) ; sinon, réitération du processus à partir de l'étape a) avec une nouvelle vitesse ($\Omega_b$) de rotation du rotor (1).

**18.** Dispositif selon la revendication précédente, **caractérisé en ce qu'**il comprend des moyens de traitement (5) aptes à rediscrétiser, selon des fréquences prédéterminées, l'un ou l'autre des signaux (S) ou des signaux de référence (B).

**19.** Dispositif selon l'une quelconque des revendications 14 à 18, **caractérisé en ce** les moyens de traitement (5) comprennent des moyens informatiques, tels que par exemple des moyens de calculs commandés en tout ou partie par un logiciel consistant en un programme informatique approprié.

**20.** Utilisation du procédé selon l'une des revendications 1 à 13, ou du dispositif selon l'une des revendications 14 à 19, pour la surveillance ponctuelle ou en ligne du fonctionnement d'une machine tournante.

**21.** Utilisation selon la revendication 20 avec déclenchement éventuel d'une alarme sonore ou visuelle lorsque la machine atteint des niveaux de vibration dépassant les seuils de sécurité admis.

**Patentansprüche**

**1.** Verfahren zur Bestimmung von Schwingungen des Rotors (1) einer drehenden Maschine, die unter normalen Betriebsbedingungen mit hoher Drehzahl ($\Omega$) arbeitet, wobei nach diesem Verfahren ein Signal (S) erfasst und digitalisiert wird, das von mindestens einem Wegaufnehmer (C) des Rotors (1) stammt, wenn dieser unter seinen normalen Betriebsbedingungen dreht, und wobei dann von diesem Signal ein Bezugssignal (B) der gleichen Art subtrahiert wird, das vorher bei einer unter der Betriebsdrehzahl ($\Omega$) liegenden Drehzahl ($\Omega_b$) des Rotors (1) bestimmt wurde, **dadurch gekennzeichnet, dass** das Bezugssignal (B) bei einer Drehzahl ($\Omega_b$) erfasst wurde dergestalt, dass die von mindestens zwei Wegaufnehmern (C1, C2) des Rotors (1) stammenden Signale winklig versetzt in einer gleichen vertikalen Ebene zur Symmetrieachse (A) des Rotors bei einer fast zeitgleichen Verschiebung weitgehend identisch sind.

**2.** Verfahren nach Anspruch 1, **dadurch gekennzeichnet, dass** die Drehzahl ($\Omega_b$), bei welcher das Bezugssignal (B) erfasst wird, bis zu 20 % unter der durchschnittlichen Drehzahl ($\Omega_m$) des in Betrieb befindlichen Rotors liegt.

**3.** Verfahren nach irgendeinem der vorstehenden Patentansprüche, **dadurch gekennzeichnet, dass** das Bezugssignal (B) bei einer Drehzahl ($\Omega_b$) des Rotors (1) erfasst wird dergestellt, dass die Unterschiede zwischen den zwei von den beiden Wegaufnehmern (C1, C2) stammenden Signalen unter einem vorbestimmten Wert liegen.

**4.** Verfahren nach irgendeinem der vorstehenden Patentansprüche, **dadurch gekennzeichnet, dass** die Bestimmung des Bezugssignals (B) mittels der folgenden Schritte erfolgt:

a) in Abhängigkeit von der Zeit und bei niedriger Drehzahl ($\Omega_b$) Erfassung, Digitalisierung und Aufzeichnung der von mindestens zwei auf einer gleichen Meßspur (2) relativ zueinander winklig versetzten Wegaufnehmern (C1, C2) des Rotors (1) stammenden Bezugssignale (B1 und B2),
b) zeitliche Versetzung mindestens eines der Bezugssignale (B1, B2), um eine Überlagerung der Signale zu erreichen,
c) bei weitgehend identischen Bezugssignalen (B1 und B2) Wahl eines dieser Signale als Bezugssignal (B) oder anderenfalls Wiederholung des Vorgangs beginnend mit Schritt a) mit einer neuen Drehzahl ($\Omega_b$).

**5.** Verfahren nach irgendeinem der vorstehenden Patentansprüche, **dadurch gekennzeichnet, dass** die Drehzahl ($\Omega_b$) des Rotors (1) im Verlauf der Erfassung des Bezugssignals (B) leicht und kontinuierlich variiert und dass die Aufzeichnung dann durch an sich bekannte Datenverarbeitungseinrichtungen verarbeitet wird, um sie so korrigieren zu können, dass sie einer bei konstanter Drehzahl ($\Omega_{bm}$) gleich der durchschnittlichen Drehzahl des Rotors (1) bei Erfassung des Bezugssignals (B) im leicht veränderlichen Bereich erfolgten Aufzeichnung äquivalent ist.

**6.** Verfahren nach irgendeinem der vorstehenden Patentansprüche, **dadurch gekennzeichnet, dass** das Bezugssignal (B) aus mehreren Versuchen mit verschiedenen Drehzahlen ($\Omega_b$) entsprechend dem Versuch ausgewählt wird, bei dem die bestmögliche Überlagerung der Signale der zwei Wegaufnehmer (C1, C2) gegeben ist.

**7.** Verfahren nach irgendeinem der vorstehenden Patentansprüche, **dadurch gekennzeichnet, dass** es sich bei den Wegaufnehmern (C, C1, C2) des Rotors (1) um Wegaufnehmer (C, C1, C2) zum Messen einer charakteristische physikalische Grösse der relativen Verschiebung des Rotors (1) in Richtung des betroffenen Wegaufnehmers wie zum Beispiel magnetische Wegaufnehmer, kapazimetrische Wegaufnehmer, optische Wegaufnehmer handelt.

**8.** Verfahren nach irgendeinem der vorstehenden Patentansprüche, **dadurch gekennzeichnet, dass** die zur Bestimmung des Bezugssignals (B) erforderlichen Wegaufnehmer (C1, C2) relativ zueinander unter einem Winkel von 90° versetzt sind.

**9.** Verfahren nach irgendeinem der vorstehenden Patentansprüche, **dadurch gekennzeichnet, dass** das Signal (S) in Abhängigkeit von der Zeit mit einer Diskretisierungsfrequenz $f_{dr}$ erfasst, digitalisiert und dann aufgezeichnet wird und dass das Bezugssignal (B) in Abhängigkeit von der Zeit mit einer Diskretisierungsfrequenz $f_{db}$ erfasst, digitalisiert und dann aufgezeichnet wird, wobei die Diskretisierungsfrequenzen $f_{dr}$ und $f_{db}$ der folgenden Gleichung entsprechen:

$$\frac{f_{dr}}{f_r} = \frac{f_{db}}{f_{rb}}$$

wobei:

$f_r =$ Drehfrequenz des Rotors bei Erfassung des Signals (S) und

$f_{rb} =$ Drehfrequenz des Rotors bei Erfassung des Bezugssignals (B).

**10.** Verfahren nach irgendeinem der Patentansprüche 1 bis 8, **dadurch gekennzeichnet, dass** der Subtraktion des Bezugssignals (B) vom Signal (S) eine Rediskretisierung des Bezugssignals (B) mit einer Rediskretisierungsfrequenz $f_{rdb}$ vorausgeht.

**11.** Verfahren nach Patentanspruch 10, **dadurch gekennzeichnet, dass** die Rediskretisierungsfrequenz $f_{rdb}$ und die Diskretisierungsfrequenz $f_{db}$ der folgenden Gleichung entsprechen:

$$0.2 \leq f_{rdb}/f_{db} \leq 1.2.$$

**12.** Verfahren nach irgendeinem der Patentansprüche 1 bis 8, 10, 11, **dadurch gekennzeichnet, dass** der Subtraktion des Bezugssignals (B) vom Signal (S) eine vom Signal (S) eine Rediskretisierung des Signals (S) mit einer Rediskretisierungsfrequenz $f_{rdr}$ vorausgeht.

**13.** Verfahren nach Patentanspruch 12, **dadurch gekennzeichnet, dass** die Rediskretisierungsfrequenz $f_{rdr}$ und die Diskretisierungsfrequenz $f_{dr}$ der folgenden Gleichung entsprechen:

$$0.2 \leq f_{rdr}/f_{dr} \leq 1.2.$$

**14.** Vorrichtung zur Bestimmung von Schwingungen des Rotors (1) einer mit hoher Drehzahl (Ω) arbeitenden drehenden Maschine, wobei die Vorrichtung mindestens zwei Wegaufnehmer (C, C1, C2) des Rotors (1) umfasst, die in einer gleichen Ebene senkrecht zur Symmetrieachse (A) des Rotors (1) winklig versetzt sind, und Einrichtungen zur Digitalisierung, Aufzeichnung und Weiterverarbeitung (4, 5) des von mindestens einem der Wegaufnehmer (C) emittierten Signals (S) besitzt, wobei die Verarbeitungseinrichtungen (4, 5) dazu geeignet sind, vom Signal (S) ein Bezugssignal (B) zu subtrahieren, das vorher bei einer niedrigeren Drehzahl ($\Omega_b$) des Rotors (1) als der Betriebsdrehzahl (Ω) erfasst, digitalisiert und aufgezeichnet wurde, wobei die niedrigere Drehzahl ($\Omega_b$) so gewählt ist, dass die von den mindestens zwei Wegaufnehmern (C1, C2) des Rotors (1) stammenden Signale bei einer fast zeitgleichen Verschiebung weitgehend identisch sind.

**15.** Vorrichtung nach Patentanspruch 14, **dadurch gekennzeichnet, dass** die Verarbeitungseinrichtungen (5) zur Auswahl des Bezugssignals (B) ausgehend von mehreren Versuchen mit verschiedenen Drehzahlen ($\Omega_b$) des Rotors (1) und Wahl des Versuchs geeignet sind, bei dem die von den zwei Wegaufnehmern (C1, C2) stammenden Bezugssignale (B1 und B2) sich am besten überlagern.

**16.** Vorrichtung nach einem der Patentansprüche 14 und 15, **dadurch gekennzeichnet, dass** es sich bei den Wegaufnehmern (C1 und C2) um Wegaufnehmer des gleichen Typs und bevorzugt um magnetische Wegaufnehmer handelt.

**17.** Vorrichtung nach einem der Patentansprüche 14 und 15, bei der die Verarbeitungseinrichtungen (4, 5) geeignet sind, ein Bezugssignal (B) entsprechend den gewünschten Geräuschpegeln wie folgt zu bestimmen:

a) zeitabhängige Erfassung, Digitalisierung und Aufzeichnung der von den mindestens zwei Wegaufnehmern (C1, C2) bei niedriger Drehzahl ($\Omega_b$) des Rotors (1) emittierten Bezugssignale (B1, B2), wobei die niedrige Drehzahl ($\Omega_b$) ein fester Wert oder leicht veränderlich ist.
b) zeitliche Versetzung mindestens eines der Bezugssignale (B1, B2) dergestalt, dass eine Überlagerung der Signale erreicht wird.
c) bei weitgehend identischen Bezugssignalen (B1, B2) Auswahl irgendeines der Signale (B1, B2) als Bezugssignal (B) oder anderenfalls Wiederholung des Vorgangs beginnend mit Schritt a) mit einer neuen Drehzahl ($\Omega_b$) des Rotors (1).

**18.** Vorrichtung nach dem vorstehenden Patentanspruch, **dadurch gekennzeichnet, dass** sie Verarbeitungseinrichtungen (5) umfasst, die geeignet sind, entsprechend vorbestimmten Frequenzen das eine oder das andere der Signale (S) oder der Bezugssignale (B) zu rediskretisieren.

**19.** Vorrichtung nach irgendeinem der Patentansprüche 14 bis 18, **dadurch gekennzeichnet, dass** zu den Verarbeitungseinrichtungen (5) Informatikeinrichtungen wie zum Beispiel Rechnersysteme gehören, die ganz oder teilweise durch eine aus einem geeigneten Informatikprogramm bestehende Software gesteuert werden.

**20.** Anwendung des Verfahrens nach einem der Patentansprüche 1 bis 13 oder Einsatz der Vorrichtung nach einem der Patentansprüche 14 bis 19 zur punktuellen Überwachung oder Online-Überwachung des Betriebs einer drehenden Maschine.

**21.** Anwendung nach Patentanspruch 20 mit ggf. Auslösung eines akustischen oder optischen Alarms, wenn die Maschine über die zulässigen Sicherheitsgrenzen hinausgehende Schwingungspegel erreicht.

**Claims**

**1.** A method of determining the vibrations of the rotor (1) of a rotary machine operating, under usual working conditions, at an elevated speed of rotation (Ω), in which method a signal (S) coming from at least one sensor (C) sensing the displacement of said rotor (1) when the latter rotates under its usual working conditions is acquired and digitised, then a reference signal (B) of the same type, which has been determined previously at a speed ($\Omega_b$) of rotation of the rotor (1) which is lower than the working speed (Ω), is subtracted therefrom, said method being **characterised in that** the reference signal (B) has been acquired at a speed ($\Omega_b$) such that the signals coming from at least two sensors (C1, C2) sensing the displacement of the rotor (1), offset angularly in one and the same plane perpendicular to the axis of symmetry (A) of said rotor, are substantially identical apart from the time lag.

**2.** A method according to claim 1, **characterised in that** said speed of rotation ($\Omega_b$) at which the reference signal (B) is acquired is less than 20% of the average speed ($\Omega_m$) of rotation of the rotor when working.

3. A method according to any one of the preceding claims, **characterised in that** the reference signal (B) is acquired at a speed ($\Omega_b$) of rotation of the rotor (1) such that the differences between the two signals coming from the two sensors (C1, C2) are less than a predetermined value.

4. A method according to any one of the preceding claims, **characterised in that** the stages of determining the reference signal (B) are as follows:

   a) the reference signals (B1 and B2) coming respectively from at least two sensors (C1, C2) sensing the displacement of the rotor (1), offset angularly with respect to one another on one and the same measurement track (2), are acquired, digitised and recorded as a function of time and at a low speed of rotation ($\Omega_b$),
   b) a time lag is produced for one at least of the reference signals (B1, B2) in order to effect superposition of said signals,
   c) if the reference signals (B1 and B2) are substantially identical, any one of said signals is selected as reference signal (B); if not, the process is repeated from stage a) with a new speed ($\Omega_{b'}$) of rotation,

5. A method according to any one of the preceding claims, **characterised in that** the speed ($\Omega_b$) of rotation of the rotor (1) varies slowly and continuously during acquisition of the reference signal (B) and **in that** the recording is then processed by computer processing means known per se which allow correction thereof to make it identical to a recording effected at constant speed ($\Omega_{bm}$), being the average speed of rotation of the rotor (1) at the time of acquisition of the reference signal (B) at a slowly variable rate.

6. A method according to any one of the preceding claims, **characterised in that** the reference signal (B) is selected from a plurality of trials at various speeds of rotation ($\Omega_b$), by selecting the trial for which the signals from the two sensors (C1, C2) are best superposed.

7. A method according to any one of the preceding claims, **characterised in that** said sensors (C, C1, C2) sensing the displacement of the rotor (1) are sensors (C, C1, C2) measuring a physical quantity characteristic of the relative displacement of the rotor (1) in the direction of the sensor in question, such as for example magnetic type sensors, capacitance sensors, optical type sensors.

8. A method according to any one of the preceding claims, **characterised in that** said sensors (C1, C2) necessary for determining the reference signal (B) are offset angularly with respect to one another by 90°.

9. A method according to any one of the preceding claims, **characterised in that** the signal (S) is acquired, digitised, then recorded as a function of time with a discretisation frequency $f_{dr}$, the reference signal (B) is acquired, digitised, then recorded as a function of time with a discretisation frequency $f_{db}$, the discretisation frequencies $f_{dr}$ and $f_{db}$ satisfying the following equation:

$$\frac{f_{dr}}{f_r} = \frac{f_{db}}{f_{rb}}$$

   in which:

   $f_r$ is the frequency of rotation of the rotor at the time of acquisition of the signal (S), and
   $f_{rb}$ is the frequency of rotation of the rotor at the time of acquisition of the reference signal (B).

10. A method according to one of claims 1 to 8, **characterised in that** subtraction of the reference signal (B) from the signal (S) is preceded by a rediscretisation stage for the reference signal (B) at a rediscretisation frequency $f_{rdb}$.

11. A method according to claim 10, **characterised in that** the rediscretisation frequency $f_{rdb}$ and the discretisation frequency $f_{db}$ satisfy the following equation:

$$0.2 \leq f_{rdb} / f_{db} \leq 1.2 .$$

12. A method according to any one of claims 1 to 8, 10, 11, **characterised in that** subtraction of the reference signal (B) from the signal (S) is preceded by a rediscretisation stage for the signal (S) at a rediscretisation frequency $f_{rdr}$.

13. A method according to claim 12, **characterised in that** the rediscretisation frequency $f_{rdr}$ and the discretisation frequency $f_{dr}$ satisfy the following equation:

$$0.2 \leq f_{rdr} / f_{dr} \leq 1.2 .$$

14. A device for determining the vibrations of the rotor (1) of a rotary machine operating at an elevated speed of rotation ($\Omega$), said device comprising at least two sensors (C, C1, C2) sensing the displacement of said rotor (1), offset angularly in one and the same plane perpendicular to the axis of symmetry (A) of the rotor (1), means for digitisation, recording and further processing (4, 5) of the signal (S) emitted by at least one of the sensors (C), said processing means (4, 5) being capable of subtracting from the signal (S) a reference signal (B) which has been previously acquired, digitised and recorded at a speed ($\Omega_b$) of rotation of the rotor (1) lower than the working speed ($\Omega$), the lower speed ($\Omega_b$) being such that the signals coming from the at least two sensors (C1, C2) sensing the displacement of said rotor (1) are substantially identical apart from the time lag.

15. A device according to claim 14, **characterised in that** said processing means (5) are capable of selecting the reference signal (B) from a plurality of trials effected at various speeds ($\Omega_b$) of rotation of the rotor (1), by selecting the trial for which the reference signals (B1 and B2) emitted by the two sensors (C1, C2) are best superposed.

16. A device according to one of claims 14 and 15, **characterised in that** the sensors (C1 and C2) are sensors of the same type, preferably sensors of the magnetic type.

17. A device according to one of claims 14 and 16, in which the processing means (4, 5) are capable of determining a reference signal (B), corresponding to the runout sought, in the following manner:

   a) acquisition, digitisation and recording, as a function of time, of the reference signals (B1, B2) emitted by said at least two sensors (C1, C2), at a low speed ($\Omega_b$) of the rotor (1), said low speed ($\Omega_b$) being fixed or slowly variable,
   b) time lag of one at least of the reference signals (B1, B2) in such a way as to effect superposition of said signals,
   c) if the reference signals (B1, B2) are substantially identical, selection of any one of said signals (B1, B2) as reference signal (B); if not, repetition of the process from stage a) with a new speed ($\Omega_b$) of rotation of the rotor (1).

18. A device according to the preceding claim, **characterised in that** it comprises processing means (5) capable of rediscretising, according to predetermined frequencies, one or other of the signals (S) or of the reference signals (B).

19. A device according to any one of claims 14 to 18, **characterised in that** the processing means (5) comprise computer means, such as for example calculation means controlled wholly or partly by software consisting of a suitable computer program.

20. Use of the method according to one of claims 1 to 13, or of the device according to one of claims 14 to 19, for intermittent or continuous monitoring of the operation of a rotary machine.

21. Use according to claim 20 with optional triggering of an acoustic or visual alarm when the machine reaches vibration levels exceeding the accepted safety thresholds.

FIG.1

FIG.2

FIG.3

C1

C2

α

1

3

4

5

FIG.4

3

C1

1

A

2

FIG.5